# EUROPEAN PATENT APPLICATION

(11) **EP 1 712 333 A1**
(43) Date of publication of application: **18.10.2006**
(21) Application number: 05008291.6
(22) Date of filing: 15.04.2005
(51) Int. Cl.: B25B 23/142

(54) **Clutch for power tool**

(71) Applicant: Mighty Seven International Co., Ltd., Taichung Hsien (TW)
(72) Inventor: Chang, Johnson, Taichung Hsien (TW)
(74) Representative: Viering, Jentschura & Partner

(57) **Abstract**

A clutch is disclosed for a power tool (10). The clutch includes a disc (39), a drum (28), at least one spring (27) and at least one pin (24). The disc (39) defines at least one arched groove (34) comprising a floor (35) and an inclined wall (36). The drum (28) defines at least one eccentric hole (22). The spring (27) is put in the eccentric hole (22). An end of the pin (24) is put in the eccentric hole (22) and pushed by means of the spring (27). An opposite end of the pin (24) is exposed from the eccentric hole (22) for pushing the inclined wall (36) before a predetermined value of torque is reached and for sliding on the inclined wall (36) after the predetermined value of torque is reached.

## Description

### Background of Invention

### 1. Field of Invention

The present invention relates to a power tool and, more particularly, to a clutch for a power tool.

### 2. Related Prior Art

As disclosed in Taiwanese Patent Publication No. 257124, a clutch 4 is provided for a power tool 1. The clutch 4 includes a frame 41, a first hammer 42, a second hammer 42', an axle 43, a first pin 44 and a second pin 44. The frame 41 defines a space 411 for receiving the first hammer 42 and the second hammer 42', apertures 412 for receiving the first pin 44 and the second pin 44 and an opening (not numbered) for receiving the axle 43. The first hammer 42 is hollow in order to receive the axle 43. The first hammer 42 includes a concave face 421 on the internal side and a recess 422 and groove 423 on the external side. The concave face 421 can contact and slide on a first anvil 433 formed on the axle 43. The recess 422 receives a first portion of the first pin 44. The first hammer 42 is hollow in order to receive the axle 43. The groove 423 receives a first portion of the second pin 44. The second hammer 42' is hollow in order to receive the axle 43. The second hammer 42' includes a concave face 421' on the internal side and a recess 422' and groove 423' on the external side. The concave face 421' can contact and slide on a second anvil 434 formed on the axle 43. The recess 422' receives a second portion of the first pin 44. The groove 423' receives a second portion of the second pin 44. In operation, the power tool 1 drives the frame 41. The frame 41 drives the hammers 42 and 42' through the pins 44. Periodically, the hammers 42 and 42' drive the axle 43 through the periodical engagement of the concave face 421 with the first anvil 433 and the periodical engagement of the concave face 421' with the second anvil 434.

Several problems have however been encountered in the use of the clutch 4. Firstly, its cost is high because it includes many parts that are assembled in a time-demanding process. Secondly, its life of service is short because it is weak. Thirdly, before the clutch 4 is finished, it is diffcult to precisely determine the maximum torque that it transmits. Fourthly, it fails to provide an adequate torque. In practice, a manual wrench has to be used in addition in order to provide an adequate torque.

An advantage of the clutch of the present invention is its low cost because it includes only a few parts and it takes only a little time to assemble the parts.

Another advantage of the clutch of the present invention is its long life of service because it is strong.

Another advantage of the clutch of the present invention is that precise determination of the maximum torque that it transmits is possible.

Another advantage of the clutch of the present invention is the provision of an adequate torque.

The present invention is therefore intended to obviate or at least alleviate the problems encountered in prior art.

### Summary of Invention

According to the present invention, a clutch is disclosed for a power tool. The clutch includes a disc, a drum, at least one spring and at least one pin. The disc defines at least one arched groove comprising a floor and an inclined wall. The drum defines at least one eccentric hole. The spring is put in the eccentric hole. An end of the pin is put in the eccentric hole and pushed by means of the spring. An opposite end of the pin is exposed from the eccentric hole for pushing the inclined wall before a predetermined value of torque is reached and for sliding on the inclined wall after the predetermined value of torque is reached.

Other advantages and novel features of the invention will become more apparent from the following detailed description in conjunction with the attached drawings.

### Brief Description of Drawings

The present invention will be described via detailed illustration of embodiments referring to the drawings.
Fig. 1 is a perspective view of a power tool equipped with a clutch according to a first embodiment of the present invention.
Fig. 2 is an exploded view of the clutch shown in Fig. 1.
Fig. 3 is a cross-sectional view taken along a line 3-3 in Fig. 4.
Fig. 4 is a cross-sectional view taken along a line 4-4 in Fig. 3.
Fig. 5 is similar to Fig. 3 but shows the clutch in another position.
Fig. 6 is a cross-sectional view taken along a line 6-6 in Fig. 5.
Fig. 7 is similar to Fig. 5 but shows the clutch in another position.
Fig. 8 is a cross-sectional view taken along a line 8-8 in Fig. 7.
Fig. 9 is similar to Fig. 7 but shows the clutch in another position.
Fig. 10 is similar to Fig. 9 but shows the clutch in another position.
Fig. 11 is similar to Fig. 10 but shows the clutch in another position.
Fig. 12 is a cross-sectional view taken along a line 12-12 in Fig. 11.
Fig. 13 is an exploded view of a clutch according to a second embodiment of the present invention.
Fig. 14 is an exploded view of a clutch according to a third embodiment of the present invention.
Fig. 15 is an exploded view of a clutch according to a fourth embodiment of the present invention.

### Detailed Description of Embodiments

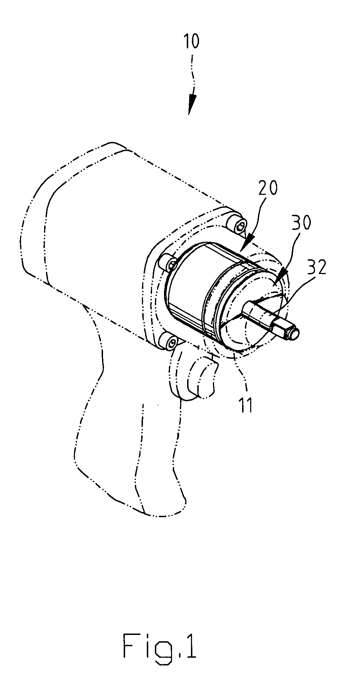

Referring to Fig. 1, a power tool 10 is equipped with a clutch according to a first embodiment of the present invention. The power tool 10 includes a front shell 11 for receiving the clutch.

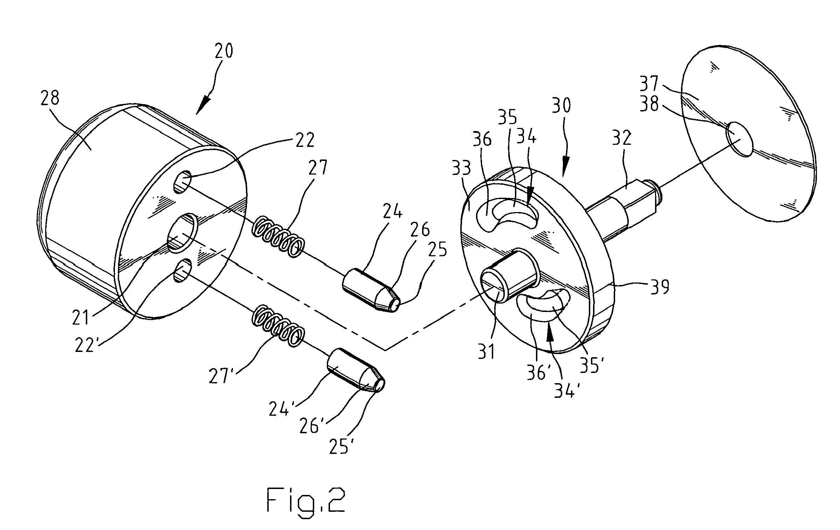

Referring to Figs. 2 through 4, the clutch includes a first stage 20 to be constantly driven by means of the power tool 10 and a second stage 30 to be periodically driven by means of the first stage 20.

The first stage 20 includes a first pin 24, a second pin 24', a first spring 27, a second spring 27' and a drum 28. The drum 28 defines a central hole 21 in a first end, a first eccentric hole 22 in the first end, a second eccentric hole 22' in the first end, a first vent 23 in a second end and in communication with the first eccentric hole 22 and a second vent 23' in the second end and in communication with the second eccentric hole 22'.

The vents 23 and 23' allow the passage of air. The first eccentric hole 22 is located further from the central hole 21 than the second eccentric hole 22' is. The first eccentric hole 22 receives the first spring 27 and the first pin 24. The second eccentric hole 22' receives the second spring 27' and the second pin 24'.

The first pin 24 includes an end 25 and a chamfered portion 26 near the end 25. The end 25 and the chamfered portion 26 may be replaced with a dome. The second pin 24' includes an end 25' and a chamfered portion 26' near the end 25'. The end 25' and the chamfered portion 26' may be replaced with a dome.

The second stage 30 includes a disc 39, a first shaft 31 formed on a first side 33 of the disc 39 and a second shaft 32 formed on a second side (not numbered) of the disc 39. The first shaft 31 is inserted in the central hole 21. The second shaft 32 is exposed from the front shell 11.

The disc 39 defines, in the first side 33, a first arched groove 34 and a second arched groove 34'.

The first arched groove 34 is located corresponding to the first eccentric hole 22 in order to receive the end 25 and the chambered portion 26 periodically. The first arched groove 34 includes a floor 35, a first wall 36 and a second wall (not numbered). The floor 35 is inclined, i.e., the first arched groove 34 includes a deep end and a shallow end. The first wall 36 of the first arched groove 34 is inclined. The floor 35 contacts the end 25 periodically. The first wall 36 of the first arched groove 34 contacts the chamfered portion 26 periodically. The chamfered portion 26 contacts the first wall 36 of the first arched groove 34 once in every round of rotation.

The second arched groove 34' is located corresponding to the second eccentric hole 22' in order to receive the end 25' and the chambered portion 26'. The second arched groove 34' includes a floor 35', a first wall 36' and a second wall (not numbered). The floor 35' is inclined, i.e., the second arched groove 34' includes a deep end and shallow end. The first wall 36' of the second arched groove 34' is inclined. The floor 35' contacts the end 25' periodically. The first wall 36' of the second arched groove 34' contacts the chamfered portion 26' periodically. The chamfered portion 26' contacts the first wall 36' of the second arched groove 34' once in every round of rotation.

The maximum torque that the first stage 20 transmits to the second stage 30 is determined based on the strength of the springs 27 and 27', the lengths and depths of the arched grooves 34 and 34', and the slope of the walls 36 and 34.

The second stage 30 further includes a shock absorber 37. The shock absorber 37 defines an aperture 38 through which the second shaft 32 is inserted. Thus, the shock absorber 37 can be provided against the second side of the disc 39. The shock absorber 37 absorbs shocks that occur when the chamfered portions 26 and 26' strike the walls 36 and 36', respectively.

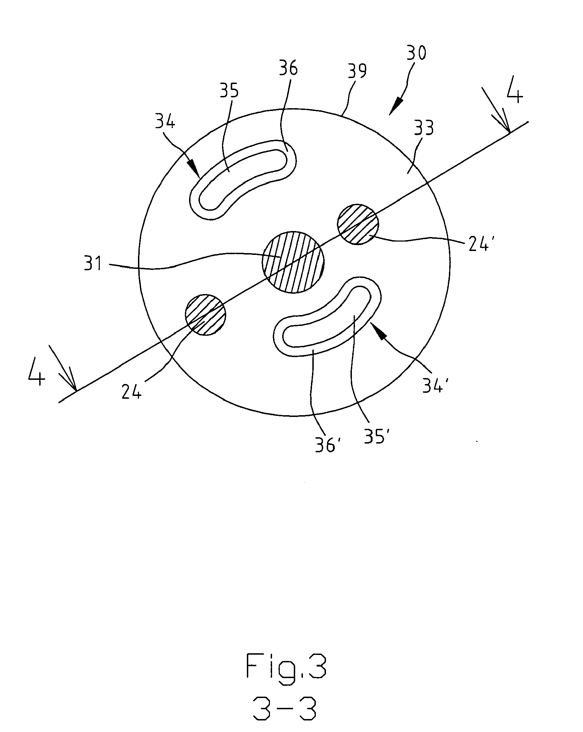

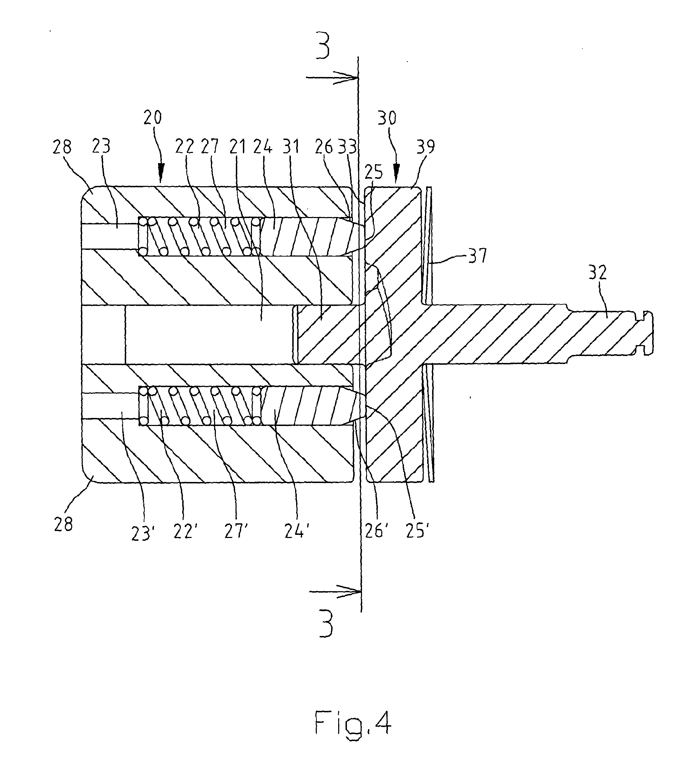

Referring to Figs. 3 and 4, when the drum 28 is still, the end 25 of the first pin 24 and the end 25' of the second pin 24' both contact the first side 33 of the disc 39.

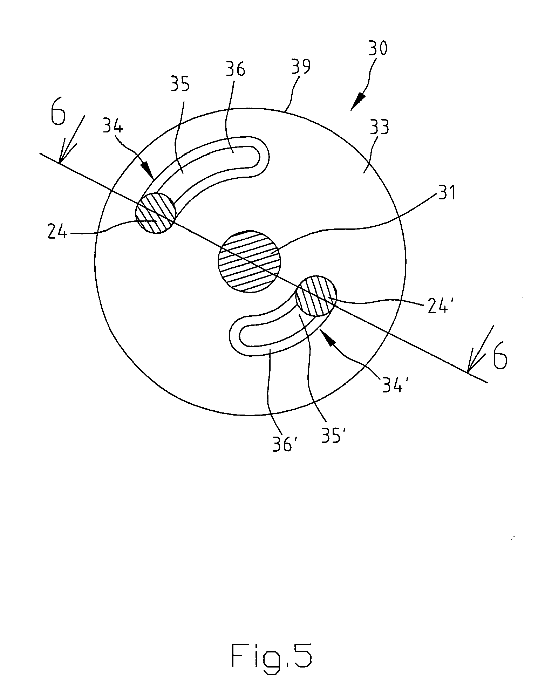

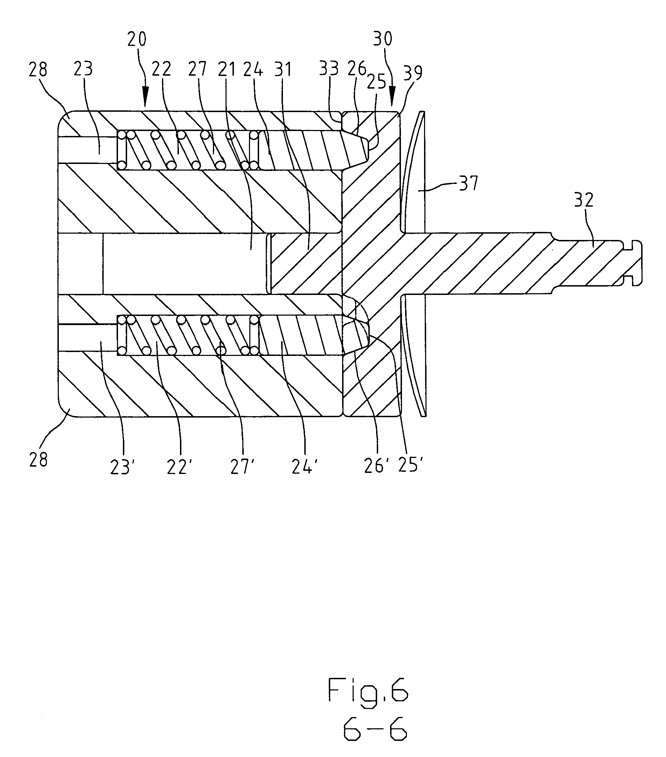

Referring to Figs. 5 and 6, the first stage 20 is rotated clockwise. The first pin 24 is moved into the deep end of the first arched groove 34, and the second pin 24' is moved into the deep end of the second arched groove 34'. The end 25 of the first pin 24 strikes the floor 35. The end 25' of the second pin 24' strikes the floor 35'. At that instant, the disc 30 moves and compresses the shock absorber 37. The shock absorber 37 absorbs the shocks, thus reducing vibration and noise during the operation of the clutch.

As the rotation of the drum 28 continues, the end 25 of the first pin 24 slides on the floor 35, and the end 25' of the second pin 24' slides on the floor 35'. Then, the chamfered portion 26 of the first pin 24 contacts the first wall 36 of the first arched groove 34, and the chamfered portion 26' of the second pin 24' contacts the first wall 36' of the second arched groove 34'.

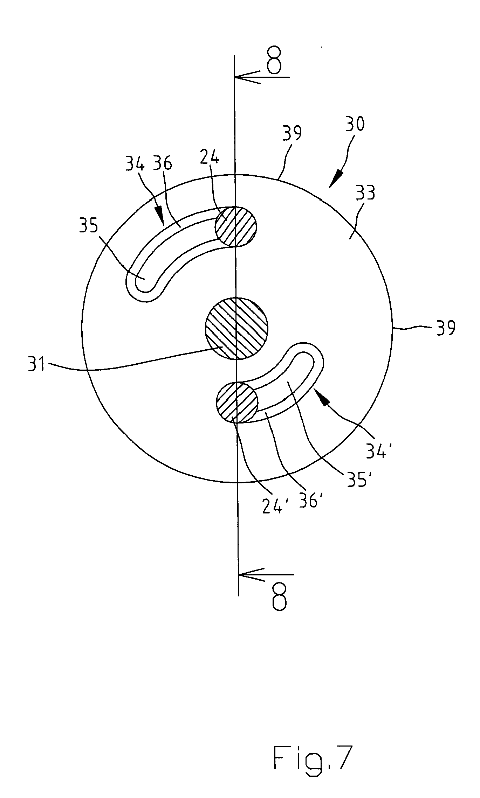

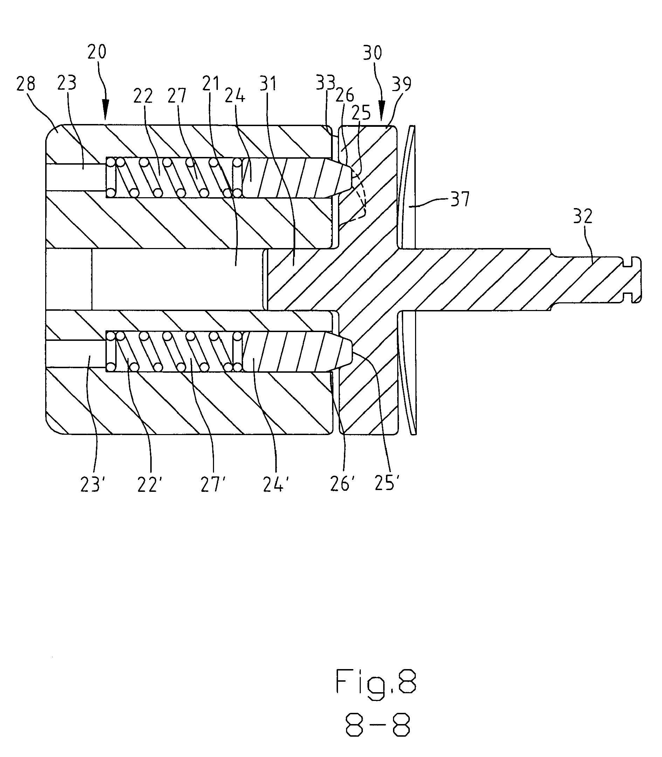

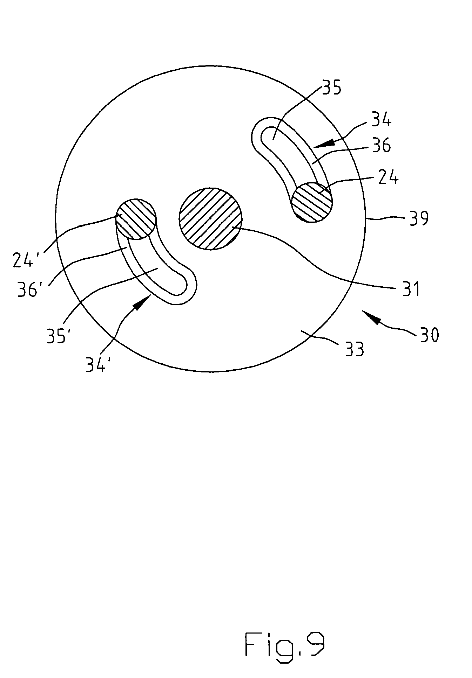

Referring to Figs. 7 through 9, as the rotation of the drum 28 continues, the chamfered portion 26 of the first pin 24 and pushes the first wall 36 of the first arched groove 34, and the chamfered portion 26' of the second pin 24' pushes the first wall 36' of the second arched groove 34'. Hence, the first stage 20 drives the second stage 30.

As the rotation of the drum 28 continues, the torque that the first stage 20 transmits to the second stage 30 accumulates. As the maximum torque is reached, the springs 27 and 27' are compressed 11. Thus, the chamfered portion 26 of the first pin 24 slides on the first wall 36 of the first arched groove 34, and the chamfered portion 26' of the second pin 24' slides on the first wall 36' of the second arched groove 34'.

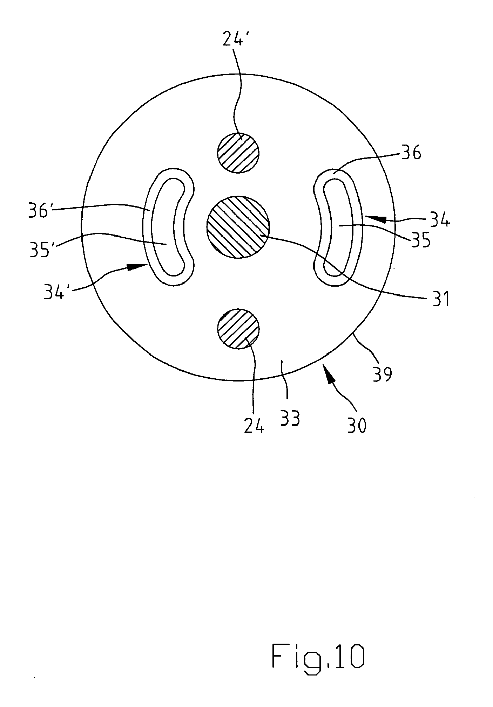

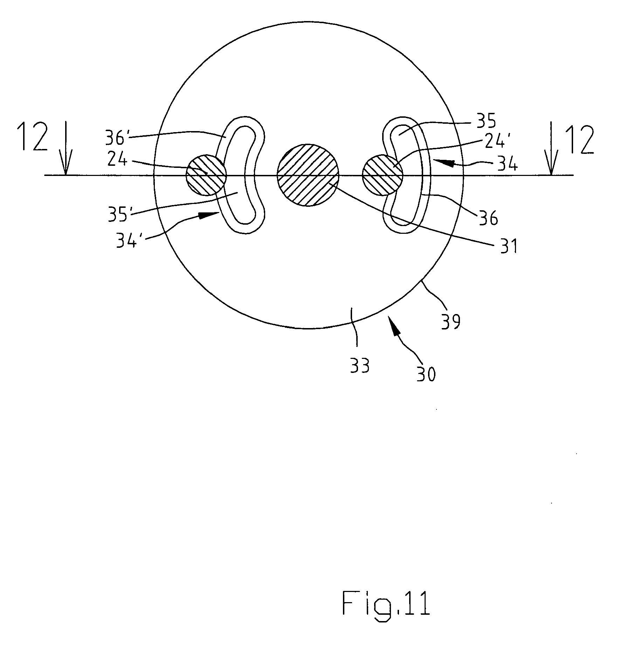

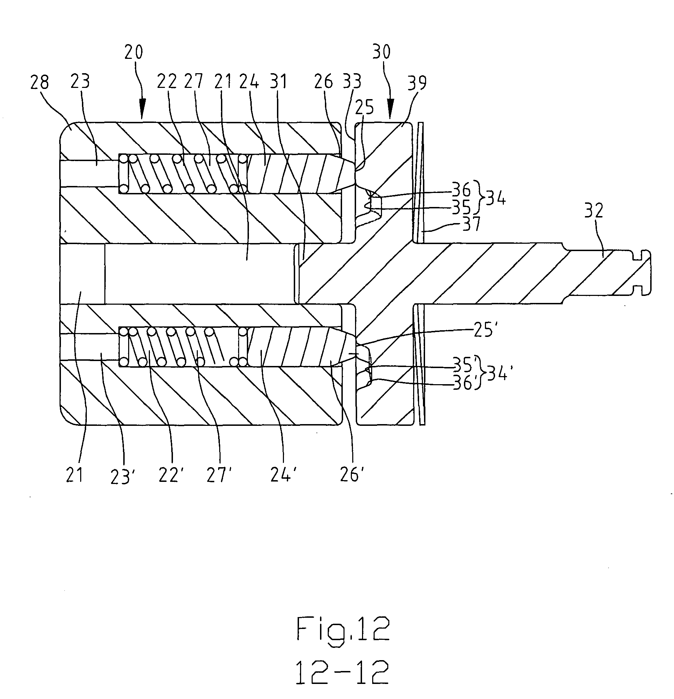

Referring to Figs. 10 through 12, as the rotation of the drum 28 continues, the first pin 24 is moved from the first arched groove 34, and the second pin 24' is moved from the second arched groove 34'. The end 25 of the first pin 24 and the end 25' of the second pin 24' both slide on the first side 33 of the disc 39.

The above-mentioned process will be repeated for a plurality of times before the power tool 10 fastens a nut on a bolt for example. To release such a nut from such a bolt, the power tool 10 is switched to reversed mode in order to drive the first stage 20 counterclockwise.

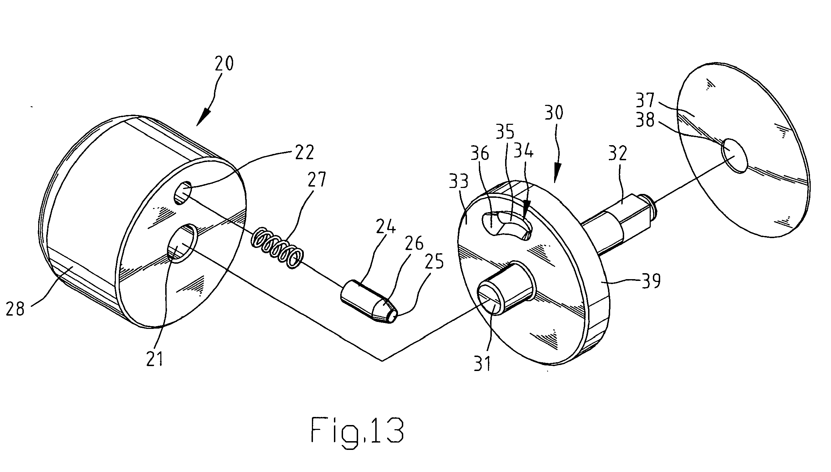

Fig. 13 shows a clutch according to a second embodiment of the present invention. The second embodiment is similar to the first embodiment except for saving the second eccentric hole 22', the second spring 27', the second pin 24' and the second arched groove 34'. The cost of the second embodiment is lower than the first embodiment because the second embodiment includes fewer parts and requires less time to assemble the parts than the first embodiment does.

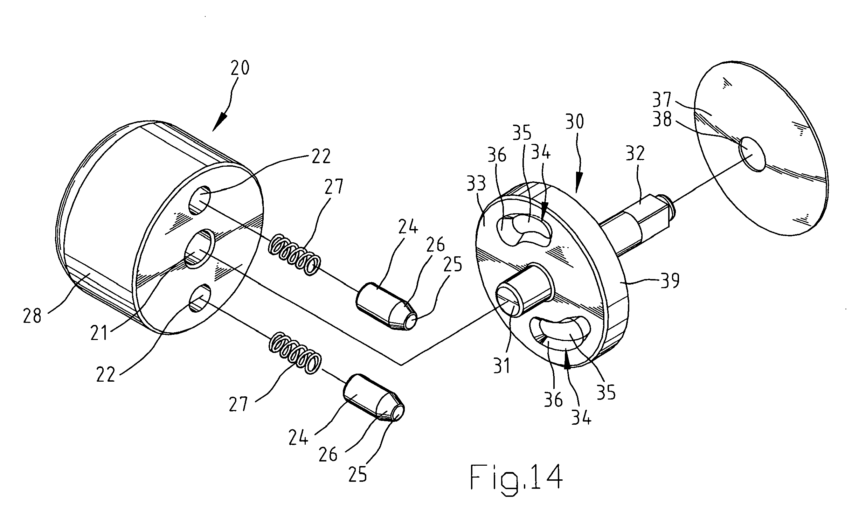

Fig. 14 shows a clutch according to a third embodiment of the present invention. The third embodiment is similar to the first embodiment except that the second eccentric hole 22' is identical to the first eccentric hole 22 and that the second arched groove 34' is identical to the first arched groove 34. Thus, the first stage 20 drives the second stage 30 twice in every round of rotation.

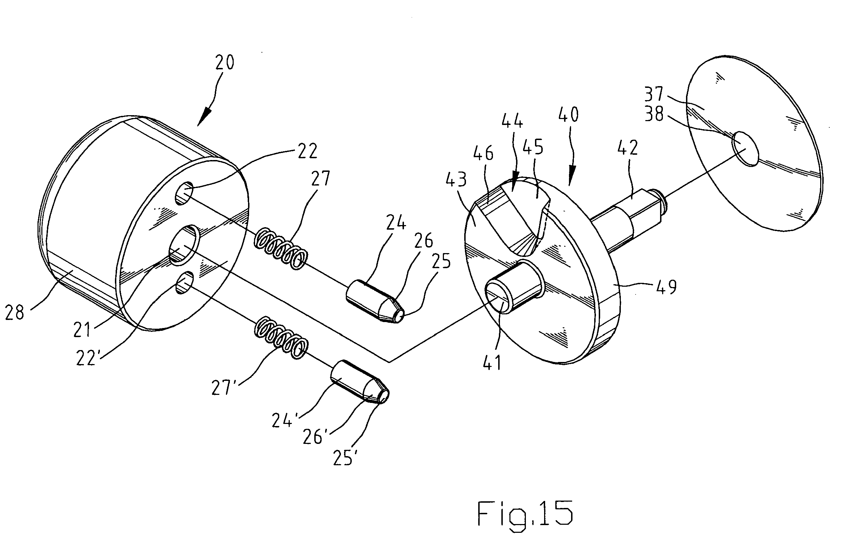

Fig. 15 shows a clutch according to a fourth embodiment of the present invention. The fourth embodiment is similar to the first embodiment except for including a second stage 40 instead of the second stage 30. The second stage 40 includes a disc 49 with a first side 43 and a second side (not numbered). The disc 49 is similar to the disc 39 except for including a V-shaped cutout 44 instead of the arched grooves 34 and 34'. The V-shaped cutout 44 includes an inclined floor 45 and an inclined wall 46. The first stage 20 drives the second stage 40 twice in every round of rotation.

The clutch of the present invention includes several advantageous features. Firstly, its cost is low because it includes only a few parts and it takes only a little time to assemble the parts. Secondly, its life of service is long because it is strong. Thirdly, it is possible to precisely determine the maximum torque that it transmits. Fourthly, it provides an adequate torque.

The present invention has been described via the foregoing detailed description of the embodiments. Those skilled in the art can derive variations from the embodiments without departing from the scope of the present invention. Therefore, the embodiments shall not limit the scope of the present invention defined in the claims.

## Claims

1. A clutch for a power tool (10), the clutch comprising:
a disc (39) defining at least one arched groove (34) comprising a floor (25) and an inclined wall (36);
a drum (28) defining at least one eccentric hole (22);
at least one spring (27) put in the eccentric hole (22); and
at least one pin (24) partially inserted in the eccentric hole (22) and pushed by means of the spring (27) and formed with an end (25) exposed from the eccentric hole (22) for pushing the inclined wall (36) before a predetermined value of torque is reached and for sliding on the inclined wall (36) after the predetermined value of torque is reached.

2. The clutch according to claim 1 wherein the pin (24) comprises a chamfered portion (26) formed near the end (25) for contact with the inclined wall (36).

3. The clutch according to claim 1 wherein the disc (39) defines two arched grooves (34; 34'), wherein the drum (28) defines two eccentric holes (22; 22') corresponding to the arched grooves (34; 34'), wherein the clutch comprises two springs (27; 27') put in the eccentric holes (22; 22') and two pins (24; 24') pushed by means of the springs (27; 27').

4. The clutch according to claim 1 wherein the floor (35) is inclined.

5. The clutch according to claim 1 wherein the disc (39) comprises a shaft (31) formed thereon, wherein the drum (28) defines a central hole (21) for receiving the shaft (31).

6. The clutch according to claim 1 wherein the disc (39) comprises a power shaft (32) formed thereon for driving a tool bit.

7. The clutch according to claim 1 comprising a shock absorber (37) provided on the disc (39) for absorbing shocks from the disc (39) when the pin (24) pushes the inclined wall (36).

8. A clutch for a power tool (10), the clutch comprising:
a disc (49) defining at least one sector-shaped cutout (44) comprising a floor (45) and an inclined wall (46);
a drum (28) defining at least one eccentric hole (22);
at least one spring (27) put in the eccentric hole (22); and
at least one pin (24) partially inserted in the eccentric hole (22) and pushed by means of the spring (27) and formed with an end (25) exposed from the eccentric hole (22) for pushing the inclined wall (46) before a predetermined value of torque is reached and for sliding on the inclined wall (46) after the predetermined value of torque is reached.

9. The clutch according to claim 8 wherein the pin (24) comprises a chamfered portion (26) formed near the end (25) for contact with the inclined wall (46).

10. The clutch according to claim 8 wherein the drum (28) defines two eccentric holes (22; 22'), wherein the clutch comprises two springs (27; 27') put in the eccentric holes (22; 22') and two pins (24; 24') pushed by means of the springs (27; 27').

11. The clutch according to claim 3 or 10 wherein the eccentric holes (22; 22') are at a same distance from the center of the drum (28).

12. The clutch according to claim 3 or 10 wherein the eccentric holes (22; 22') are at different distances from the center of the drum (28).

13. The clutch according to claim 8 wherein the floor (45) is inclined.

14. The clutch according to claim 8 wherein the disc (49) comprises a shaft (41) formed thereon, wherein the drum (28) defines a central hole (21) for receiving the shaft (41).

15. The clutch according to claim 8 wherein the disc (49) comprises a power shaft (42) formed thereon for driving a tool bit.

16. The clutch according to claim 8 comprising a shock absorber (37) provided on the disc (49) for absorbing shocks from the disc (49) when the pin (24) pushes the inclined wall (46).

17. The clutch according to claim 1 or 8 wherein the drum (28) defines at least one vent (23) communicated with the eccentric hole (22).
